# EUROPEAN PATENT SPECIFICATION

(11) **EP 2 315 419 B1**
(45) Date of publication and mention of the grant of the patent: **19.02.2020**
(21) Application number: 10251836.2
(22) Date of filing: 22.10.2010
(51) Int. Cl.: H04M 1/247, H04M 3/42, H04M 1/253, H04M 1/57

(54) **Method for transmitting context information to a called destination**
Verfahren zur Übertragung von Kontextinformationen zu einem gerufenen Teilnehmer
Procédé pour transmettre une information contextuelle à la partie appelée

(30) Priority: 22.10.2009 US 603683
(43) Date of publication of application: 27.04.2011
(73) Proprietor: Bellmar Communications LLC, Chicago IL 60603 (US)
(72) Inventor: Eng, Kai Y., Atlantic Highlands New Jersey 07716 (US); Pancha, Pramod, Belle Mead New Jersey 08502 (US)
(74) Representative: Prock, Thomas

(56) References cited:
- EP-A2- 0 924 917
- US-A1- 2005 243 982
- US-A1- 2006 045 243
- US-A1- 2008 005 301
- US-A1- 2008 051 071
- US-B1- 7 325 029

## Description

### TECHNICAL FIELD

This invention relates to telephony, and more specifically, to an improved method for facilitating context sensitive telephone calls; i.e., telephone calls that convey the context of such call to the called party.

### BACKGROUND OF THE INVENTION

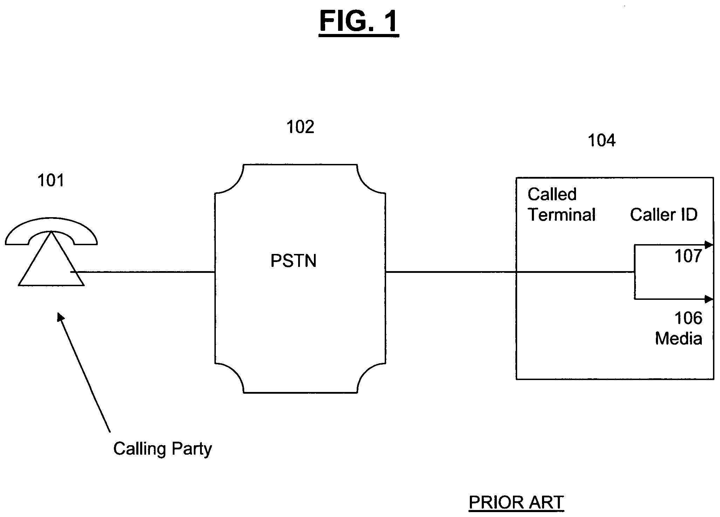

Telephone service has been in use for more than one hundred years without much change in the basic service concept and user experience. Recently, however, caller ID has become available. Caller ID provides that prior to a call being completed, and during call setup, out of band information identifying the calling party is transmitted to the called party. Caller ID allows the calling number and possibly a name associated with the calling number to be displayed on a called terminal. As indicated in FIG. 1, a calling terminal 101 completing a call over the public switched telephone network (PSTN) 102 connects to a called phone 104. The called phone 104 can typically separate out the basic identity of the calling terminal (and perhaps a user permanently associated with the calling terminal) and nothing more. After the call in connected, the media stream 106 is conveyed "in band" as shown.

One disadvantage of caller ID is that the displayed information is typically tied to the calling terminal. That is, it is usually not variable to display anything about the call other than the calling terminal from which is originates and possibly a user that is somewhat permanently associated with that terminal.

Still another problem with prior art caller ID systems is that they do not optimally take advantage of more advanced computerized and internet voice equipment which has, to a large extent, replaced conventional telephones.

In view of the foregoing, there exists a need in the art to advantageously utilize modern voice communication systems in order to convey out of band and potentially context sensitive information concerning telephone calls.

US 7325029 B1 discloses methods for operating multimedia computers to provide e-commerce voice communication capability directly between any computer connected to a computer network such as the Internet and any telephone device connected to the PSTN are disclosed.

US 2005/243982 A1 discloses a mechanism for placing a telephone call while at the same time communicating context (e.g., subject, importance and/or nature) of the telephone call. The caller uses a mechanism on a user interface to instruct a caller computing system to place a telephone call to a callee computing system. Using the same user interface, the caller also identifies some contextual information for the telephone call such as, for example, the subject, importance and/or nature of the telephone call. The caller computing system then constructs a call invitation data structure that includes both an invitation to the callee to engage in a telephone conversation and the user-entered identification of the context of the telephone call.; Upon receiving the call invitation data structure, the callee computing system reads the identification of the context of the telephone call, and then takes appropriate action based on the context for the telephone call.

US 2008/051071 A1 discloses techniques that extend the capabilities of mobile phone devices to automatically assign media content items to "contacts" list entries.

US 2006/045243 A1 discloses system and methods which provide network support for providing caller flexibility on "name", "number", and "message" for a calling terminal that is displayed on a called terminal

US 2008/005301 A1 discloses a mobile computing device, such as a cell phone or "handheld" with expanded features and capabilities for elderly persons, children, and others with either health-related issues or the need to monitoring by friends, family members, healthcare personnel, or others. Illustratively, the invention is a middleware application for a handheld/cellular device, that may be remotely configurable, and interacts with network service providers to provide a single-button solution for elderly people requiring assistance and for the notification of multiple parties regarding the nature of the required assistance.

### DEFINITION OF THE INVENTION

The present invention is defined by the appended claims to which reference should now be made. The present invention provides a method according to claim 1. Further aspects of the invention are outlined in the dependent claims. Embodiments which do not fall within the scope of the claims do not describe part of the present invention. The following numbered clauses are examples for better understanding the present invention.
Clause 1: A method comprising:
   providing a soft button for activation by a user (with a client device);
   in response to said activation, downloading an agent, said agent containing a destination telephone number and at least one of 1) instructions for gathering context information for a phone call, and 2) context information for the phone call; and
   in response to said downloading, causing said client device to make the telephone call, and transmitting said context information to a called destination.
2. The method of clause 1 further comprising determining an equipment type associated with said called destination, and adapting said context information to be transmitted in response to said determining.
3. The method of clause 2 further comprising, in response to said determining, substituting caller ID data if said equipment type is of a first category, and inserting additional data other than caller ID data if said equipment type is of a second category.
4. The method of clause 1 wherein said destination telephone number is supplied to said agent prior to said downloading of said agent but after said activation by said user.
5. A button server comprising a processor for ascertaining source information associated with a request, and software for inserting a context reference number indicative of information regarding a reason for a call, said context reference number and said destination telephone number being inserted into a software agent in response to a request by a user, said agent then being downloaded automatically to a client device to cause the client device to automatically connect to a called device associated with a destination telephone number, and to transmit to said called device said context reference number, said context reference number causing said called device to query a database and obtain context information for the call corresponding to said context reference number.
6. A method comprising generating one or more context buttons on a computing device, initiating a call in response to activation of that button, said call providing a caller ID, and substituting said caller ID with context information dependant at least upon context associated with said button.
7. The method of clause 6 wherein said computing device is configured for generating more than one button, and wherein said context is different among at least two of said buttons.
8. The method of clause 6 wherein said context information also depends upon a called device to which said call is destined.
9. The method of clause 7 wherein said context information also depends upon a called device to which said call is destined.
10. A method comprising:
   activating a context button on a computing device, said context button causing a call to be initiated;
   if said call is initiated to a first type of device, transmitting a first set of context data with the call; and
   if said call is to be initiated with a second type of device, transmitting a second set of context data with the call.
11. The method of clause 10 wherein the context data of the first or second type causes an automatic message to be conveyed to the called party, and to be logged in a database, and the call to automatically terminate.
12. A system for initiating telephone calls comprising:
   a receiver for receiving a request, said request including source information for said call;
   a processor configured to embed within an agent information indicative of a called terminal, and instructions for obtaining call context; and
   a transmitter for transmitting said agent to a computing device.
13. The system of clause 12 wherein said computing device utilizes said instructions to obtain call context, and then initiates a call using said information indicative.
14. A method of providing call context comprising:
   providing a calling device with a context reference number;
   receiving a call from said calling device at a first computer;
   using said context reference number to perform a query of a second computer, wherein the second computer may be the same or different from the first computer, and retrieve call context; and
   processing said received call using said retrieved context.
15. The method of clause 14 wherein the retrieved context is displayed to an operator.
16. The method of clause 14 wherein said call is first routed to a media server, and wherein said media server determines a proper format for said call based at least upon call destination, and wherein said media server then formats the call in said proper format.
17. A method comprising;
   receiving a call request from a caller having an identity;
   ascertaining whether said call request is from a first type of equipment;
   if so, redirecting said call to a different destination;
   receiving said call at said different destination; and
   correlating said received call with a previously received identifier, and using the previously received identifier to retrieve context information for said call for forwarding to a destination terminal, while preventing said identity from being forwarded to said destination.
18. The method of clause 17 wherein said received identifier is received at said different destination from a first destination after said call is received by said first destination.
19. A combination mobile telephone and computing device comprising a receiver for receiving a telephone call, a processor for extracting a context identifier from said telephone call prior to said call being answered, a communications system for performing a query to ascertain context information from said context identifier, and a display controller for displaying the retrieved context information on a display.
20. The computing device of clause 19 wherein said context information includes information indicative or descriptive of products to be purchased, and which information is used to route the telephone call.
21. A media router comprising a processor configured to receive a call, ascertain whether call context information is present in the form of an identifier to such call context information, or the context information itself, and forward the context information to a called destination.
22. The media router of clause 21 further configured to ascertain whether said call is to be transmitted over an IP network or a PSTN, and formatting said call accordingly.
23. A computing device comprising a display for displaying multiple activatable buttons, an interface for obtaining and assembling call context information, and a communications system to initiate a call, the call context information obtained and assembled by the interface varying based at least upon which of plural activatable buttons is activated.
24. The computing device of clause 23 wherein the call context information also varies based upon a type of equipment known to be associated with a destination to be called.
25. A method of including context in a call comprising initiating a call from a computing device, receiving said call at a server, determining, at the server, if context information should be inserted or if an identifier to locate context information should instead be inserted, and inserting either the context information or the identifier.
26. The method of clause 25 wherein the determining step includes correlating the call received at the server with an identifier previously provided to the server.
27. The method of clause 26 wherein said determining step includes ascertaining a type of equipment associated with a destination for the call.
28. A method of completing a telephone call from a computing device to a destination comprising activating a button on said computing device, said activating causing a call request to be transmitted to a server, said call request including context information, downloading software to said computing device that causes said software to make a voice call to a specific number, said specific number being dependant upon said context, said software not being configurable by said user to call numbers other than the specific number.
29. A method comprising routing a call from a caller, using a calling terminal to a called terminal, and displaying context information on the called terminal prior to said call being completed, said context information being dependant upon at least two of the following: 1) the calling terminal, 2) the caller; 3) a type associated with said called terminal.
30. The method of clause 29 wherein further comprising substituting caller ID information with other information, wherein said other information is dependant upon at least capabilities associated with said called terminal.
31. The method of clause 30 wherein said other information is either new context to be displayed or a context reference number to be used for ascertaining new context to be displayed, depending upon a set of capabilities of a computer or of said called terminal.
32. The method, combination or device of any one or more preceding claims, wherein said called telephone number is also embedded in said agent.
33. A method of conveying call context information, said method comprising the steps of receiving a request from a client device, determining if said client device is of a first or second type, if of the first type, conveying to the client device context information for a call, if of a second type, conveying to the client instructions to obtain context information from a server.
34. The method of clause 33 further comprising transmitting a call identifier to the server, and correlating said call identifier with said client device to retrieve said context information.
35. The method of clause 34 wherein the context information depends upon a device type of said called terminal.
36. The method of clause 34 wherein said instructions comprise a telephone number or data network address of the server to supply context information to said client.
37. The method of clause 34 wherein context information is logged in a computer database.

### BRIEF DESCRIPTION OF THE DRAWINGS

FIG. 1 depicts a prior art conventional public switched telephone network caller ID system;
FIG. 2 depicts the components of an exemplary embodiment of the present invention; and
FIG. 3 depicts an additional embodiment of the present invention.

### DETAILED DESCRIPTION OF THE PREFERRED EMBODIMENTS

In accordance with one embodiment of the invention, a soft button is utilized on a computing device to initiate a call. The activation of the button causes a server to download a "soft phone." The soft phone is essentially a software agent that operates on the computing device to cause the computing device to call a specified telephone number only. Because the called telephone number is associated with a computing device, the call can embed certain context information unique to the particular soft button activated. Alternatively, the system can substitute for the caller ID information a unique identification number, which is used to do a database lookup and cause context for the call to be pulled and conveyed to the called terminal. This unique identification number is called a context reference number.

In other embodiments the context may be placed into the call by the computing device initiating the call, rather than by the server, or by any other router or server through which the call may pass.

In still other embodiments, the system can ascertain whether the called terminal is sophisticated enough to accept certain context information and based upon such determination, insert the context information when appropriate.

In still other embodiments, the system can ascertain what type or volume of context information the called terminal can accept and display, and based thereon, insert a context reference number that causes information to be displayed which is dependant upon said type or volume of information the called terminal can display.

These and other embodiments are described in more detail below.

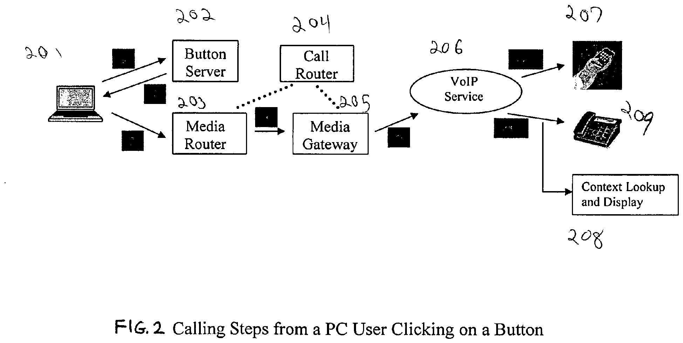

FIG. 2 depicts an exemplary embodiment of the present invention utilizing a PC 201 to initiate the call. When the "context button" displayed on the PC is activated (e.g.; by clicking a mouse), a data network is used to connect the PC 201 to a button server 202. The button server 202 downloads a software agent which causes the PC to setup a connection over the data network to media router 203.

Optionally, the downloaded agent may also include a context reference number that specifies how to lookup the context of the call. The lookup can be performed optionally at the PC, but may be simply transmitted through the media router to the called terminal 207 or 209. The context may be looked up in a database at any point in call routing, by any server or computer.

The PC 201 may use the soft phone to initiate a call via the internet and the call is directed to a specific media router handling media packets from the PC. The media router then transmits the media packets, optionally through the media gateway, over a network to a called terminal 207 or 209.

Although media gateway is shown as connected to a VOIP service 206, the media gateway may include plural interfaces to various services, such as PSTN, an IP telephony network, etc.

When the call reaches, for example, an intelligent terminal 209, the intelligent terminal can extract out the context reference number and use it to perform a database lookup. The database lookup maps the context reference number to a specific activation of a specific soft button by PC 201. The context associated with that call may then be displayed if terminal 209 has a display.

During call setup, the context reference number can also be used by the media router, the call router, or any other server in the system, to look up the context of the call in a database or other electronic file. In such embodiments, the context information pulled from the database and forwarded through the network to the called terminal, so that the called terminal itself does not have to do the lookup in order to obtain the context sensitive information.

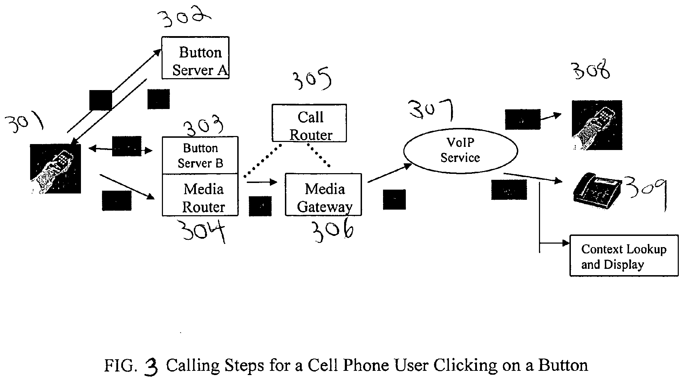

Figure 3 shows an alternative embodiment of the present invention which is optimally employed in a web enabled mobile device such as a mobile phone. In accordance with the embodiment of Figure 3, a mobile device 301 activates an icon that causes a message to be sent to the button server A 302. As it may be desirable to service mobile devices from a separate button server 303, button server A may return only a message causing mobile device 301 to redirect its request to a separate server 303. Or, what is represented at servers 302 and 303 may be implemented in the same physical computer.

Button server 303 captures the context reference number embedded in the button, and gives instructions to the mobile device to a make a PSTN call to the Media Router 304. Button server 303 then informs the media router 304 of the caller ID of calling terminal 301, as well as the context reference number associated with the call. When the call arrives at media router 304 from calling terminal 301, it is associated with the previously stored context reference number, and the proper context for the call may be extracted from a database or other file.

In one or more of the above embodiments, the context that is to be sent with the call to the called terminal may be varied based upon that called terminal type. Specifically, if the calling terminal, or other server, computer, or router in the system, does a table lookup to determine the context information, the same computer, router, or other server, or some other computer in the network, can maintain information indicating the type of terminal associated with the called number. Then, the context information can be optimally displayed on such terminal, depending upon whether such called terminal is a simple cell phone, or a more sophisticated PC type of device. The specific context information pulled may also vary depending upon the particular called terminal equipment, and whether its display is capable of displaying certain types and amounts of information. By maintaining, or obtaining in real time, information concerning the called terminal type, the information to be displayed can be customized to the type or category of terminal called.

In one example of the above embodiment, a server in the system ascertains first whether the called terminal is a simple, conventional telephone, or a more sophisticated computing device. This determination may be made from prestored data. In the former case, the context information is caller ID only. In the latter, the caller ID is removed from the signaling and in its place is substituted either the context reference number discussed above, or, alternatively, the context information itself may be placed therein. Thus, prior to altering the conventional caller ID, the server first determines if the called terminal is capable of optimally displaying the type and volume of information to be substituted for the caller ID, or if the called terminal is capable of using a context reference number to look up such context information. Then, the proper substitution of data, customized to the called terminal type, is placed into the call.

In one or more embodiments, the system or server inserting the context information may determine whether the destination equipment, or some other equipment through which the call will be routed, has the ability to look up context information from a context reference number. If so, said context reference number is inserted, but if not, the context information itself may be inserted.

In one or more embodiments, a plurality of context sensitive buttons may be displayed on a calling computing device. In response to a user activating one of said context buttons, the software agent including the web phone that is downloaded, may differ for each button. The downloading of the software agent may be accomplished using one or more known techniques for an agent to be downloaded and installed on a PC or a handheld device.

In addition, the context associated with one or more of the plurality of buttons may vary depending upon user login, even for the same computing device. The context may also be dependant upon a combination of the category or type of called number equipment, user login, and the particular soft button activated by the user.

Regardless of the context ultimately transmitted with the call, the called terminal can itself log the various contexts of numerous calls, and can thus create an audit trail of the context of numerous calls. In addition, the context information can cause a called terminal to initiate some other action, such as send an email, make an audible announcement, etc.

In another embodiment, the examples shown and described above in Figures 2 and 3 may be implemented in the same system. A button server is implemented that ascertains, upon receipt of the request represented by a user selecting a button, the type of equipment being used by the call originator. The button server them preferably implements the embodiment of Figure 3 if a cell phone/handheld device is being used, or the embodiment of Figure 2 if a PC is being used.

Moreover, the type or category of called equipment and/or caller equipment may be utilized to determine which of the embodiments described above is utilized, and also, what particular content is displayed on the destination device. The device can be queried to make such a determination if the destination device is prearranged to supply such information, or alternatively, a table lookup as described above can be used for this purpose.

Following are some examples of using the foregoing techniques to convey and/or display specific call context.

**Electronic Greeting Cards:** Each e-card includes a "Call Me" button. In purchasing the e-card, the Card Giver is given an option to designate the card with a code to identify the intended Card Recipient with a context, for example, "Melissa - Birthday." This code is imprinted into the button by way of associating the code "Melissa - Birthday" with the button's unique Button ID Number in a Database maintained as part of the system. When the Call-Me button is clicked to trigger a phone connection to be established from the Card Recipient to the Card Giver, at least two scenarios are possible depending on the handset used by the Call Recipient.

In a first scenario, the called party is using a PC or a smart cell phone with Internet capabilities, as opposed to a legacy telephone with, at most, a simple display. The message "Melissa - Birthday" can be retrieved from the Database and displayed on the receiving device so that the Card Giver can identify the call context readily. A relatively simple software application can retrieve and display the context information.

In a second scenario, the receiving device, a legacy phone, cannot display or accept the context code. In this case, a particular numeric code is pre-programmed and substituted as Caller ID for display, in advance of the message. The Card Giver has the choice of pre-programming this numeric code into the receiver's phone book directory for display as "Melissa - Birthday" upon receiving this numeric code as Caller ID.

Note that a Card Giver could have sent multiple cards to the same Card Recipient, e.g., "Melissa - Birthday," "Melissa - Golf Game," or "Melissa - Fri Dinner," and the traditional use of Caller ID cannot differentiate between these contexts, but the techniques of the present invention can.

Sales email and cards: In this application scenario, the Call-Me button is applied to email messages and e-cards distributed for the purpose of sales promotion and advertisements. The technical aspects are similar to those of the Greeting Card example. But there are additional advantages of having the context available in the following cases.

First, if the electronic advertisements are distributed to a general list with unknown recipients, then the context can pinpoint the item in promotion and be used in routing the call to a dedicated merchant or a particular sales person for that item. Further, the electronic ads can be distributed to a pre-selected group of customers whose identities are known to the sender. In that case, regardless of how or where the caller is making the caller, the button context can readily identify the exact identity of the caller and the item of promotion at the same time.

**Social Networking:** In social networking, people often email to one another without knowing their identities other than their email user names. The anonymity in the situation is a desirable aspect to be preserved if voice communications were to be added. Current practice typically involves both parties to use the same application software to establish mutual voice communications, e.g., QQ, MSN or Skype. In using the context-based button of the present invention (made available on a website or an email), a call can be made to any receiving phone (VoIP or PSTN) without disclosing the receiving number and thus preserving the anonymity of the receiving party, and the button itself can be clicked on an email message to initiate the call without disclosing the origin of the call, or clicked from a website from anywhere. The call context in this example is the ready identification of the call as part of social networking.

**Website Shopping:** In using the call buttons on a shopping website, it is possible to assign a different button to every different product of different choice parameters, that is, at granular levels not easily achievable otherwise. This aspect can be used to direct calls based on the model or merchandise type, or special items, or type of customers (if login information is captured as part of the context).

**Political Action:** As an example, a political action organization engages in a massive email campaign to lobby support (or objection) to a proposed bill pending in the Congress. A call button is included in the email to call some public political office to voice one's opinion on a specific issue, e.g., "Call White House to Object to Income Tax Increase." The context of the call is then the opinion of the issue itself. Not only can the system route the call to the White House, a simultaneous logging of the call made available to the originating political action organization will create statistics and records to use. Note that this approach is distinctly different from asking people to call the White House themselves to voice their opinions - the offered button allows for issue-specific opinions and the retained use of statistics to the originating organization.

Other examples of context can include text describing the purpose of the call, or any other information relevant to the call beyond simply conveying the identification of the originating number and a user associated with it, as in caller ID. Also, it is noted that the network over which the above described embodiments operate may be a VOIP network, a network more directed to telephony, or any other type or mix of types of networks over which the invention may be implemented.

The above and other variations of context are intended to be covered by the following claims appended hereto.

## Claims

1. A method comprising:
providing a soft button for activation by a user with a client device (201; 301); **characterised by**:
in response to said activation of said soft button on said client device, downloading a software agent from an external button server to said client device, said downloaded software agent containing a destination telephone number and instructions for gathering context information for a telephone call, and
causing said client device (201; 301), through said downloaded software agent, to make the telephone call to a called destination terminal (207, 209; 309) having said destination telephone number and transmit said instructions for gathering context information via a communication network (203, 204, 205, 206; 304, 305, 306, 307) to the called destination terminal; and
determining, based on said instructions for gathering context information, context information from at least one of a component of the communication network and the called destination terminal.

2. The method of claim 1, further comprising determining an equipment type associated with said called destination terminal (207, 209; 308, 309), and adapting said context information in response to said determining the equipment type associated with said called destination terminal.

3. The method of claim 2, further comprising, in response to said determining the equipment type associated with said called destination terminal, one of:
substituting caller ID data if said equipment type is of a first equipment type category, and
inserting additional data other than caller ID data if said equipment type is of a second equipment type category.

4. The method of claim 1, wherein said destination telephone number is supplied to said downloaded software agent prior to said downloading of said software agent and after said soft button activation by said user.

5. The method of claim 1, wherein said telephone call provides a caller ID, and substitutes said caller ID with said instructions for gathering context information dependent at least upon context associated with said soft button.

6. The method of claim 1, or claim 5 wherein said client device is configured for generating more than one soft button, and wherein said context is different among at least two of said soft buttons.

7. The method of any of claims 1, 5 or 6, wherein said context information also depends upon the called destination terminal to which said telephone call is destined.

8. The method of any preceding claim, further comprising:
if said telephone call is initiated to a first type of device, transmitting a first set of context data with the telephone call; and
if said telephone call is to be initiated with a second type of device, transmitting a second set of context data with the telephone call.

9. The method of claim 8, wherein the context data of the first or second type causes an automatic message to be conveyed to the called destination terminal, and to be logged in a database, and the telephone call to automatically terminate.

10. The method of any preceding claim, further comprising:
providing said client device with a context reference number as the instructions for gathering context information, which indicates the context of the telephone call;
receiving the telephone call from said client device at a first computer;
using said context reference number to perform a query of a second computer, wherein the second computer may be the same or different from the first computer, and retrieve call context information; and
processing said received call using said retrieved context.

11. The method of claim 10, wherein the retrieved context information is displayed to an operator.

12. The method of claim 10, wherein said telephone call is first routed to a media server, and wherein said media server determines a proper format for said telephone call based at least upon the called destination terminal, and wherein said media server then formats the telephone call in said proper format.

13. The method of any preceding claim, wherein the method comprises in response to said activation of said soft button to request the telephone call, ascertaining whether said client device is of a first type of equipment;
if so, redirecting said telephone call request to a different destination server; receiving said telephone call request at said different destination server; and correlating said received telephone call request with a previously received context identifier contained in the soft button, and using the previously received context identifier to retrieve context information for said telephone call for forwarding to the called destination terminal.

14. The method of claim 13, wherein said received context identifier is received at said different destination server from a first destination after said telephone call is received by said first destination.

## Patentansprüche

1. Verfahren, umfassend:
Bereitstellen einer Software-Taste zur Aktivierung durch einen Benutzer mit einer Client-Vorrichtung (201; 301);
**gekennzeichnet durch**:
als Reaktion auf die Aktivierung der Software-Taste auf der Client-Vorrichtung, Herunterladen eines Software-Agenten von einem externen Tastenserver in die Client-Vorrichtung, wobei
der heruntergeladene Software-Agent eine Teilnehmertelefonnummer und Anweisungen enthält, um Kontextinformationen für einen Telefonanruf zu sammeln, und
Veranlassen, dass die Client-Vorrichtung (201; 301), durch den heruntergeladenen Software-Agent, einen Telefonanruf an das gerufene Teilnehmerendgerät (207, 209, 309) ausführt, welches die Teilnehmertelefonnummer aufweist und die Anweisungen zum Sammeln der Kontextinformationen über ein Kommunikationsnetz (203, 204, 205, 206; 304, 305, 306, 307) an das angerufene Teilnehmerendgerät überträgt; und
Bestimmen, basierend auf den Anweisungen zum Sammeln der Kontextinformationen, von Kontextinformationen aus mindestens einem von einer Komponente des Kommunikationsnetzes und dem angerufenen Teilnehmerendgerät.

2. Verfahren nach Anspruch 1, ferner umfassend das Bestimmen eines Ausrüstungstyps, der dem angerufenen Teilnehmerendgerät (207, 209; 308, 309) zugeordnet ist, und das Anpassen der Kontextinformationen, als Reaktion auf das Bestimmen des Ausrüstungstyps, der dem angerufenen Teilnehmerendgerät zugeordnet ist.

3. Verfahren nach Anspruch 2, ferner umfassend, als Reaktion auf das Bestimmen des Ausrüstungstyps, der dem angerufenen Teilnehmerendgerät zugeordnet ist, eines von:
Ersetzen der Anrufer-ID-Daten, falls der Ausrüstungstyp einer ersten Ausrüstungstypkategorie zugehört, und
Einführen von zusätzlichen Daten, die von den Anrufer-ID-Daten unterschiedlich sind, falls der Ausrüstungstyp einer zweiten Ausrüstungstypkategorie zugehört.

4. Verfahren nach Anspruch 1, wobei die Teilnehmertelefonnummer dem heruntergeladenen Software-Agenten vor dem Herunterladen des Software-Agenten und nach der Aktivierung der Software-Taste durch den Benutzer zugeführt wird.

5. Verfahren nach Anspruch 1, wobei der Telefonanruf eine Anrufer-ID bereitstellt und die Anrufer-ID mit den Anweisungen zum Sammeln von Kontextinformationen in Abhängigkeit von mindestens einem Kontext, welcher der Software-Taste zugeordnet ist, ersetzt.

6. Verfahren nach Anspruch 1 oder Anspruch 5, wobei die Client-Vorrichtung konfiguriert ist, um mehr als eine Software-Taste zu erzeugen, und wobei der Kontext der mindestens zwei Softwaretasten unterschiedlich ist.

7. Verfahren nach einem der Ansprüche 1, 5 oder 6, wobei die Kontextinformationen auch von dem angerufenen Teilnehmerendgerät abhängen, für das der Telefonanruf bestimmt ist.

8. Verfahren nach einem der vorhergehenden Ansprüche, ferner umfassend:
falls der Telefonanruf zu einem ersten Gerätetyp initiiert wird, Übertragen eines ersten Satzes von Kontextdaten mit dem Telefonanruf; und
falls der Telefonanruf mit einem zweiten Gerätetyp initiiert werden soll, Übertragen eines zweiten Satzes von Kontextdaten mit dem Telefonanruf.

9. Verfahren nach Anspruch 8, wobei die Kontextdaten des ersten oder zweiten Typs das Zuführen einer automatischen Nachricht an das angerufene Teilnehmerendgerät und das Aufzeichnen der Nachricht in eine Datenbank und das automatische Beenden des automatischen Telefonanrufs verursachen.

10. Verfahren nach einem der vorhergehenden Ansprüche, ferner umfassend:
Bereitstellen einer Kontextreferenznummer an die Client-Vorrichtung, als die Anweisungen zum Sammeln der Kontextinformationen, welche Nummer den Kontext des Telefonanrufs angibt;
Empfangen des Telefonanrufs von der Client-Vorrichtung in einem ersten Computer;
Verwenden der Kontextreferenznummer, um eine Anfrage an einen zweiten Computer zu richten, wobei der zweite Computer der erste Computer oder ein anderer Computer sein kann, und um Anrufkontextinformationen abzurufen; und
Verarbeiten des empfangenen Anrufs, durch Verwendung des abgerufenen Kontexts.

11. Verfahren nach Anspruch 10, wobei die abgerufenen Kontextinformationen einem Bediener angezeigt werden.

12. Verfahren nach Anspruch 10, wobei der Telefonanruf anfänglich an einen Mediaserver weitergeleitet wird, und wobei der Mediaserver ein geeignetes Format für den Telefonanruf basierend mindestens auf das angerufene Teilnehmerendgerät bestimmt, und wobei der Mediaserver dann den Telefonanruf im dem geeigneten Format formatiert.

13. Verfahren nach einem der vorhergehenden Ansprüche, wobei das Verfahren, als Reaktion auf die Aktivierung der Software-Taste zur Anforderung des Telefonanrufs, das Ermitteln umfasst, ob die Client-Vorrichtung eines ersten Ausrüstungstyps ist;
falls ja, Umleiten der Telefonanrufanforderung an einen unterschiedlichen Teilnehmerserver;
Empfangen der Telefonanrufanforderung im unterschiedlichen Teilnehmerserver, und
Korrelieren der empfangenen Telefonanrufanforderung mit einer im Vorab empfangenen Kontextkennung, die in der Software-Taste enthalten ist, und Verwenden der im Vorab empfangenen Kontextkennung, um Kontextinformationen für den Telefonanruf zur Weiterleitung an das angerufene Teilnehmerendgerät abzurufen.

14. Verfahren nach Anspruch 13, wobei die empfangene Kontextkennung in dem unterschiedlichen Teilnehmerserver von einem ersten Teilnehmer empfangen wird, nachdem der Telefonanruf durch den ersten Teilnehmer empfangen worden ist.

## Revendications

1. Procédé comprenant :
la fourniture d'une touche programmable destinée à être activée par un utilisateur à l'aide d'un dispositif de client (201 ; 301) ;
**caractérisé par** :
en réponse à ladite activation de ladite touche programmable sur ledit dispositif de client, le téléchargement d'un agent logiciel à partir d'un serveur de touche(s) externe sur ledit dispositif de client, ledit agent logiciel téléchargé contenant un numéro de téléphone de destination et des instructions pour collecter une information contextuelle pour un appel téléphonique ; et
le fait d'enjoindre ledit dispositif de client (201 ; 301), par l'intermédiaire dudit agent logiciel téléchargé, à passer l'appel téléphonique sur un terminal de destination appelée (207, 209, 309) qui dispose dudit numéro de téléphone de destination et à transmettre lesdites instructions pour collecter une information contextuelle via un réseau de communication (203, 204, 205, 206 ; 304, 305, 306, 307) au terminal de destination appelée ; et
la détermination, sur la base desdites instructions pour collecter une information contextuelle, d'une information contextuelle en provenance d'au moins un moyen pris parmi un composant du réseau de communication et le terminal de destination appelée.

2. Procédé selon la revendication 1, comprenant en outre la détermination d'un type d'équipement qui est associé audit terminal de destination appelée (207, 209 ; 308, 309), et l'adaptation de ladite information contextuelle en réponse à ladite détermination du type d'équipement qui est associé audit terminal de destination appelée.

3. Procédé selon la revendication 2, comprenant en outre, en réponse à ladite détermination du type d'équipement qui est associé audit terminal de destination appelée, la réalisation de l'une des actions qui suivent :
la substitution de données d'ID d'appelant si ledit type d'équipement relève d'une première catégorie de types d'équipement ; et
l'insertion de données additionnelles autres que des données d'ID d'appelant si ledit type d'équipement relève d'une seconde catégorie de types d'équipement.

4. Procédé selon la revendication 1, dans lequel ledit numéro de téléphone de destination est fourni audit agent logiciel téléchargé avant ledit téléchargement dudit agent logiciel et après ladite activation de touche programmable par ledit utilisateur.

5. Procédé selon la revendication 1, dans lequel ledit appel téléphonique fournit un ID d'appelant, et substitue audit ID d'appelant lesdites instructions pour collecter une information contextuelle qui dépend d'au moins un contexte qui est associé à ladite touche programmable.

6. Procédé selon la revendication 1 ou la revendication 5, dans lequel ledit dispositif de client est configuré pour générer plus d'une touche programmable, et dans lequel ledit contexte est différent entre au moins deux desdites touches programmables.

7. Procédé selon l'une quelconque des revendications 1, 5 ou 6, dans lequel ladite information contextuelle dépend également du terminal de destination appelée auquel ledit appel téléphonique est destiné.

8. Procédé selon l'une quelconque des revendications qui précèdent, comprenant en outre :
si ledit appel téléphonique est initié sur un premier type de dispositif, la transmission d'un premier jeu de données contextuelles avec l'appel téléphonique ; et
si ledit appel téléphonique doit être initié à l'aide d'un second type de dispositif, la transmission d'un second jeu de données contextuelles avec l'appel téléphonique.

9. Procédé selon la revendication 8, dans lequel les données contextuelles du premier ou second type ont pour effet qu'un message automatique est convoyé jusqu'au terminal de destination appelée et est journalisé dans une base de données, et il est automatiquement mis fin à l'appel téléphonique.

10. Procédé selon l'une quelconque des revendications qui précèdent, comprenant en outre :
la fourniture audit dispositif de client d'un numéro de référence contextuelle en tant qu'instructions pour collecter une information contextuelle, lequel indique le contexte de l'appel téléphonique ;
la réception de l'appel téléphonique en provenance dudit dispositif de client au niveau d'un premier ordinateur ;
l'utilisation dudit numéro de référence contextuelle pour réaliser une requête d'un second ordinateur, dans lequel le second ordinateur peut être le même ordinateur que le premier ordinateur ou peut être différent de celui-ci, et pour récupérer une information contextuelle d'appel ; et
le traitement dudit appel reçu en utilisant ledit contexte récupéré.

11. Procédé selon la revendication 10, dans lequel l'information contextuelle récupérée est affichée pour un opérateur.

12. Procédé selon la revendication 10, dans lequel ledit appel téléphonique est en premier lieu routé sur un serveur de média, et dans lequel ledit serveur de média détermine un format approprié pour ledit appel téléphonique sur la base au moins du terminal de destination appelée, et dans lequel ledit serveur de média formate ensuite l'appel téléphonique selon ledit format approprié.

13. Procédé selon l'une quelconque des revendications qui précèdent, dans lequel le procédé comprend, en réponse à ladite activation de ladite touche programmable pour demander en requête l'appel téléphonique, l'évaluation de si oui ou non ledit dispositif de client relève d'un premier type d'équipement :
s'il en est ainsi, la redirection de ladite requête d'appel téléphonique sur un serveur de destination différent ;
la réception de ladite requête d'appel téléphonique au niveau dudit serveur de destination différent ; et
la corrélation de ladite requête d'appel téléphonique reçue avec un identifiant de contexte reçu au préalable qui est contenu dans la touche programmable, et l'utilisation de l'identifiant de contexte reçu au préalable pour récupérer une information contextuelle pour ledit appel téléphonique pour son transfert au terminal de destination appelée.

14. Procédé selon la revendication 13, dans lequel ledit identifiant de contexte reçu est reçu au niveau dudit serveur de destination différent depuis une première destination après que ledit appel téléphonique est reçu par ladite première destination.
